Europäisches Patentamt

(19) European Patent Office    (11) Numéro de publication: **0 090 683**

Office européen des brevets    **B1**

(12) **FASCICULE DE BREVET EUROPÉEN**

(45) Date de publication du fascicule du brevet:
10.06.87

(21) Numéro de dépôt: **83400392.3**

(22) Date de dépôt: **25.02.83**

(51) Int. Cl.⁴: **G 11 B 7/08,** G 11 B 7/12,
G 02 B 7/18

(54) **Tête optique dans un dispositif d'enregistrement lecture d'un support d'information.**

(30) Priorité: **09.03.82 FR 8203938**

(43) Date de publication de la demande:
**05.10.83 Bulletin 83/40**

(45) Mention de la délivrance du brevet:
**10.06.87 Bulletin 87/24**

(84) Etats contractants désignés:
**DE FR GB IT NL SE**

(56) Documents cité:
**DE-A-2 630 381
DE-A-3 131 212
FR-A-2 178 107
FR-A-2 378 329
NL-A-8 103 449**

(73) Titulaire: **THOMSON- CSF, 173, Boulevard Haussmann, F-75379 Paris Cedex 08 (FR)**

(72) Inventeur: **Bricot, Claude, THOMSON- CSF SCPI 173, bld Haussmann, F-75739 Paris Cedex 08 (FR)**
Inventeur: **Chaboche, Michel, THOMSON- CSF SCPI 173, bld Haussmann, F-75739 Paris Cedex 08 (FR)**
Inventeur: **Volleau, Patrick, THOMSON- CSF SCPI 173, bld Haussmann, F-75739 Paris Cedex 08 (FR)**
Inventeur: **Leterme, Dominique, THOMSON- CSF SCPI 173, bld Haussmann, F-75739 Paris Cedex 08 (FR)**
Inventeur: **Le Merer, Jean- Pierre, THOMSON- CSF SCPI 173, bld Haussmann, F-75739 Paris Cedex 08 (FR)**

(74) Mandataire: **Weinmiller, Jürgen, Lennéstrasse 9 Postfach 24, D-8133 Feldafing (DE)**

LIBER, STOCKHOLM 1987

## Description

L'invention se rapporte au domane des disques supports d'information, enregistrables et lisibles optiquement, l'information étant enregistrée sous forme d'une perturbation d'une couche sensible à un rayonnement, par exemple une couche thermosensible.

Une tête optique peut comporter:
- un laser semiconducteur type AsGa;
- un objectif de mise à l'infini;
- un ou deux prismes anamorphoseurs;
- un cube séparateur de polarisation;
- une lame quart d'onde;
- un miroir de renvoi;
- un ensemble de servomoteurs pour la focalisation sur le disque et pour le suivi de piste.

Des dispositifs d'enregistrement lecture sont décrits dans les documents DE-A-3 131 212 et DE-A-2 630 381. A la figure 7 du document DE-A-2 630 381, on peut voir que l'axe de rotation d'un miroir de renvoi est disposé de façon que les rayons qui en émergent en direction de l'objectif passent par le foyer arrière de celui-ci.

Le faisceau lumineux émis par la source laser après réflexion sur le miroir de renvoi est focalisé par l'objectif de focalisation sur une piste prédéterminée du support d'information. Ce miroir de renvoi permet un asservissement radial de la tête optique. Mais ce faisceau, du fait de la rotation de ce miroir de renvoi autour de son axe, subit des effets de pupille. En effet il est diaphragmé par la pupille d'entrée de l'objectif de focalisation.

Le dispositif de l'invention permet de pallier cet inconvénient de l'art connu.

Le dispositif de l'invention a pour objet une tête optique dans un dispositif d'enregistrement-lecture d'un support d'information comprenant des éléments de piste adjacents, comportant une source laser à semiconducteur émettant un faisceau collimaté selon une direction déterminée et éclairant via un miroir de renvoi pivotant autour d'un axe la pupille d'entrée d'un objectif projetant dans une surface de référence contenant ladite piste un spot lumineux astreint par des moyens d'asservissement radial à suivre l'un quelconque desdits éléments de piste lors du défilement dudit support d'information sous ladite tête optique; lesdits moyens d'asservissement radial comportant des moyens photodétecteurs du rayonnement recueilli par cet objectif en provenance de ce support d'information; ladite tête optique étant mobile dans une direction orthogonale aux éléments de piste, afin d'accéder avec ledit spot à l'un quelconque desdits éléments de piste agencés dans ladite surface de référence, caractérisé en ce que ledit axe est situé dans le plan de ladite pupille; ladite pupille étant imagée dans le plan focal dudit objectif, et ledit miroir coopèrant avec des moyens de blocage.

D'autres caractéristiques et avantages de l'invention apparaîtront dans la description ci-après, en référence aux figures annexées pami lesquelles:
- la figure 1 illustre un dispositif de l'art connu;
- les figures 2 à 5 illustrent le fonctionnement du miroir de renvoi dans des dispositifs de l'art connu;
- les figures 6 et 7 illustrent le fonctionnement du miroir dans la tête optique selon l'invention;
- la figure 8 illustre une tête optique mettant en oeuvre l'invention.

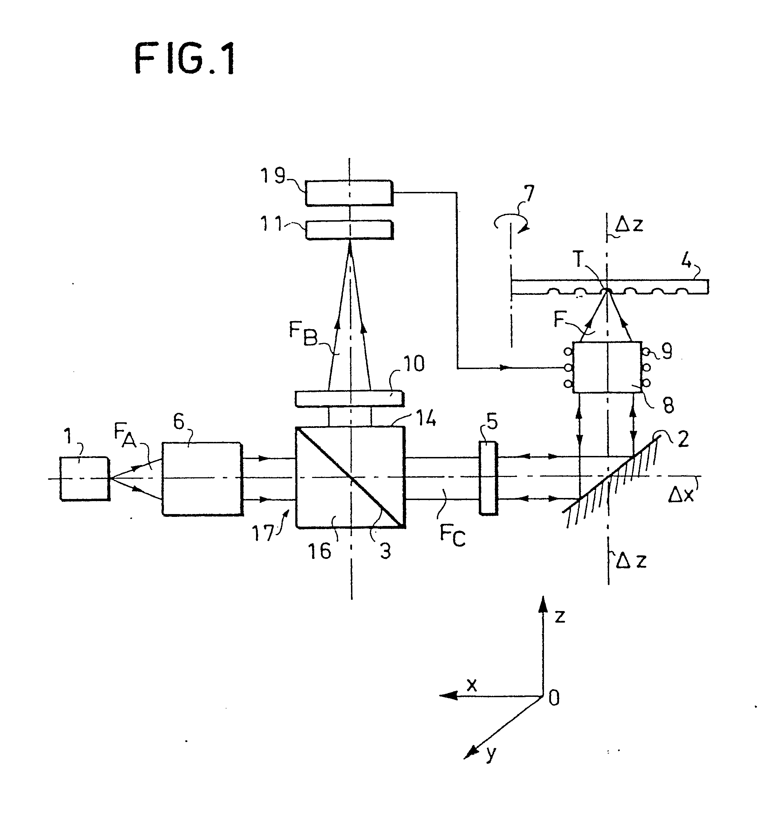

La figure 1 représente un dispositif de l'art connu. Sur cette figure 1, le laser semi conducteur est polarisé linéairement suivant le plan de la jonction, ce qui permet d'utiliser un séparateur de faisceau par polarisation 16. Celui-ci peut-être, par exemple un cube constitué de deux prismes collés. La surface de séparation 3 constituée par l'hypothénuse des deux cubes est traitée de façon à être séparatrice de polarisation: elle transmet en totalité des rayonnements ayant une polarisation donnée et elle réfléchit en totalité des rayonnements ayant une polarisation à $\pi/2$ de la précédente.

Ainsi sur la figure 1, le rayonnement $F_A$ provenant de la source laser est intégralement transmis vers le disque 4. Un objectif 6 d'axe optique confondu avec l'axe $\Delta_x$ est placé entre la laser 1 et le séparateur de faisceau par polarisation 16. A sa sortie le rayonnement est rendu à peu près parallèle pour atteindre en sa totalité la face 17 du séparateur de faisceau 16. Cet objectif est conçu de façon à ne pas présenter d'aberrations sphériques pour les ouvertures maximales du faisceau $F_A$ formés par le laser 1.

Le faisceau $F_C$ transmis par ce séparateur par polarisation 16 atteint ensuite la lame parallèle quart d'onde 5. Cette lame est orientée à $\pi/4$ de la polarisation du faisceau incident $F_C$.

Cette lame quart d'onde permet de réaliser un découplage optique. En effet les rayonnements issus de la source 1 et réfléchis par la surface du support d'information 4 n'auront plus une même polarité et ne pourront donc interférer.

De plus, l'onde incidente polarisée linéairement ressort de cette lame parallèle quart d'onde 5 polarisée circulairement et par exemple dans le sens levogyre. Cette onde va être transmise aux éléments de la tête d'enregitrement-lecture et réfléchie par le disque. Elle est retournée ensuite vers la lanne quart d'onde 5 toujours polarisée circulairement mais dans le sens dextrogyre. Il s'en suit que cette onde est retournée vers le séparateur de faisceau 16, après traversée de la lame quart d'onde 5, polarisée linéairement mais à $\pi/2$ radians de la polarisation originale. Il s'en suit qu'à la traversée du séparateur de faisceau 16 il y a réflexion sur la face 3.

Ainsi le faisceau réfléchi par la surface du disque 4 de la figure 1 est séparé du faisceau émis par le laser 1 grâce à la lame quart d'onde 5 et à la surface séparatrice 3 d'un cube séparateur par polarisation 16. Lorsque le faisceau F est parfaitement focalisé sur le disque, formant une tâche quasi ponctuelle T, après traversée de la lentille convergente 10 qui peut être par exemple une lentille plan convexe, le faisceau de retour $F_B$ se focalise en un point. Lors de la lecture, la puissance du faisceau $F_B$, qui peut être détectée au voisinage de ce point, par des moyens de détection 11 est fonction de l'état de surface du disque 4 au point T. La présence d'une empreinte gravée en creux implique une absence ou une diminution du pouvoir réfléchissant du disque 4. Au contraire, dans les zones non gravées, le faisceau est totalement réfléchi. Ainsi, la puissance du faisceau $F_B$ est modulée au fur et à mesure de la rotation du disque et de l'avance radiale de la tête, au rythme de la modulation de relief préalablement inscrite sur le disque. Par ailleurs, tant au cours de l'enregistrement que de la lecture, il est souhaitable que les moyens de détection 11 puissent détecter les erreurs de focalisation (le point T n'est pas exactement dans le plan du disque) exprimées sous la forme d'un décalage en Z. Les signaux de détection de ces erreurs sont alors utilisés par l'intermédiaire du circuit 19 pour asservir la position de l'objectif 8. Ces moyens de détection peuvent également permettre de détecter les erreurs de suivi radial (le point T n'est pas situé sur la piste gravée, dans le cas de la lecture, ou sur la piste que l'on souhaite tracer généralement matérialisée sous forme d'une piste pré-gravée dans le cas de l'enregistrement), exprimées sous la forme d'un décalage sur l'axe radial du disque 4.

Sur le parcours du faisceau $F_C$ on positionne un miroir galvanométrique 2 dont le pivotement autour d'un axe assure l'asservissement radial. Ce miroir de renvoi 2 est inséré avant l'objectif 8 de façon à dévier selon un axe $\Delta z$ le faisceau $F_C$ reçu selon l'axe x. L'objectif 8 focalise alors le faisceau F sur le disque support d'information 4. Ce disque est animé d'un mouvement de rotation symbolisé par la flèche 7.

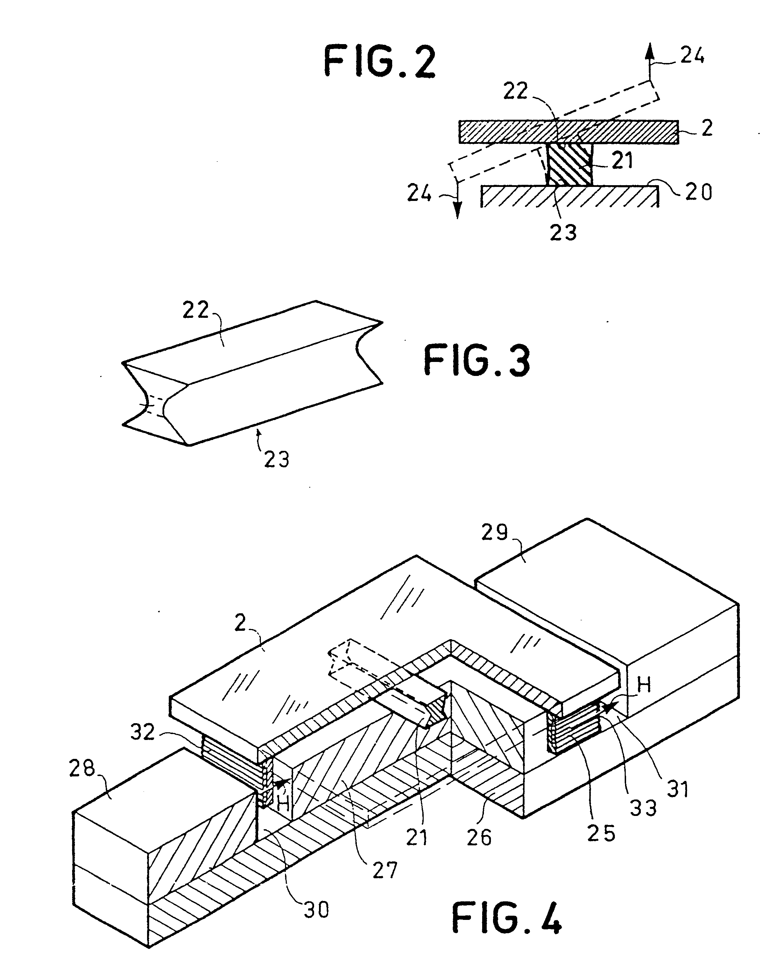

Dans les figures 2, 3 et 4 on va décrire une réalisation préférentielle du miroir de renvoi 2 utilisé dans les dispositifs de l'art connu et dont certains éléments sont repris à titre non limitatif dans l'invention.

Comme représenté schématiquement en coupe sur la figure 2, le plan mobile dont est solidaire le miroir 2 et qui, dans un exemple de réalisation est le miroir lui-même repose sur un plan 20 du socle fixe par l'intermédiaire d'un élément élastique prismatique 21 dont l'axe est la direction autour de laquelle pivote ce miroir 2. L'élément 21 est un prisme par exemple en caoutchouc, possèdant deux faces latérales parallèles d'appui 22 et 23. La face 22 est collée sur la face inférieure du miroir 2, la face 23 de ce prisme est collée sur le plan 20 du socle fixe. Le miroir 2, est disposé sensiblement symétriquement sur l'élément 21 de façon à être en équilibre parallèlement au plan 20 en absence de force électrodynamiques.

Les moyens moteurs électrodynamiques dont est muni ce déflecteur et qui ne sont pas représentés sur ce schéma produisent sur le miroir 2 un couple de forces représenté par les flèches 24 sur la figure 2. Sous l'effet de ce couple, le miroir 2 bascule comme représenté sur la figure 2, entraînant la déformation en flexion de l'élément 21 qui lui reste attaché et qui exerce, sur le miroir 2, une force de rappel qui tend à le ramener dans sa position initiale.

Pour augmenter la définition du mouvement de rotation, on peut utiliser un élément 21 possèdant un étranglement longitudinal, parallèle aux faces d'appui sous l'effet du couple de forces faisant basculer le miroir, cet élément se déforme préférentiellement dans la zone de moindre résistance mécanique, c'est à dire dans la partie étranglée. Si elle est suffisamment étroite, elle peut être assimilée à un axe de rotation. Un exemple de réalisation d'un tel élément est représenté sur la figure 3. C'est un prisme à section en X. Ce prisme possède deux faces parallèles 22 et 23, destinées à être reliées, par collage par exemple, respectivement au miroir et au plan du socle fixe.

La section droite de ce prisme est un X dont la partie étranglée délimitée arbitrairement par les pointillés, constitue la section de "l'axe" de rotation du système.

Un déflecteur optique mettant en oeuvre un tel élément à section en X est représenté sur la figure 4. Ce déflecteur est constitué d'un ensemble d'éléments mobiles reposant sur un ensemble d'éléments fixes par l'intermédiaire de l'élément élastique à section en X. Sur la face intérieure du miroir 2 est collé un cadre supportant le bobinage 25. Le miroir 2 est rectangulaire, et le bobinage est un cadre à section rectangulaire, de dimensions légèrement inférieures à celles du miroir. L'ensemble des éléments fixes comprend un socle proprement dit 26, sur lequel sont disposés trois blocs de ferrite 27, 28, 29 de façon à ménager deux espaces 30 et 31, parallèles à deux côtés du miroir dans lesquels règnent deux champs magnétiques identiques dirigés selon le sens des flèches H. Le miroir 2 est rellé au bloc de ferrite 27 servant de plan fixe par l'intermédiaire de l'élément prismatique en caoutchouc 21 dont la face latérale supérieure 22 est collée à la face inférieure du miroir 2 et dont la face latérale inférieure 23 est collée à la face supérieure de la ferrite 27. Deux côtés opposés 32 et 33 de la bobine 25 plongent dans les espaces 30 et 31 où règne le champ magnétique H permanent. Quand la bobine est alimentée par un courant électrique I, les deux côtés opposés 32 et 33 subissent deux forces de même intensité et de sens contraire, ce qui fait pivoter le miroir 2 autour de "l'axe" de rotation constitué par l'étranglement de l'élément élastique 21. Cet élément exerçant un couple de rappel sur le miroir, ce dernier se place dans une position qui est fonction de l'intensité du courant électrique I, ce qui rend possible la télécommande de l'orientation du miroir. Dans une application au disque optique, un tel déflecteur est utilisé pour l'asservissement radial du faisceau optique sur la piste gravée sur le disque.

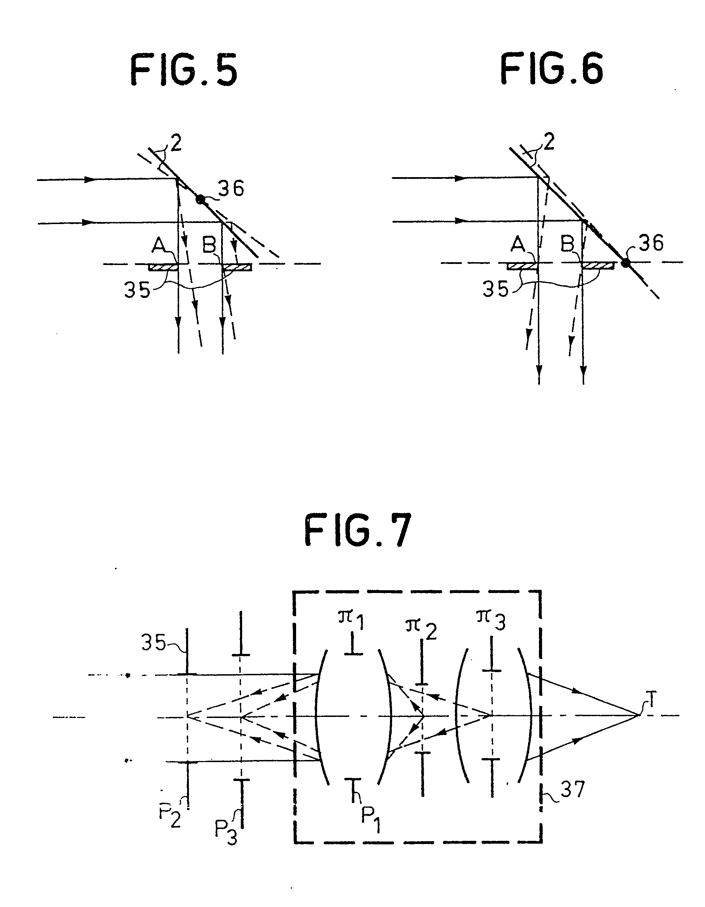

Dans les dispositifs de l'art connu, le miroir 2 tourne autour d'un axe 36 qui est situé en son centre de symétrie comme représenté en figure 5. Mais le faisceau incident représenté alors en pointillés est alors diaphragmé par la pupille d'entrée 35 de l'objectif de focalisation.

Dans la tête optique selon l'invention, l'axe de rotation 36 du miroir galvanométrique a été déportée pour le placer dans le plan de la pupille d'entrée 35 de l'objectif de focalisation sur le disque, ceci pour éviter les effets de pupille liés à la rotation du miroir 2 autour de son axe 36. D'autre part pour éviter un effet de pupille au retour, le plan de la pupille se trouve au foyer de l'objectif. Pour des raisons de commodité (éviter d'svoir un trop grand bras de levier qui risquerait de perturber le système), la pupille d'entrée 35 de l'objectif de focalisaion se trouve le plus possible en avant de l'objectif.

Ainsi comme représenté en figure 6, lorsque le miroir de renvoi 2 tourne autour de son axe 36, il passe toujours par les deux points A et B, et toute son énergie atteint ainsi le disque 4.

Dans la tête optique de l'invention, la pupille d'entrée 35 est considérée préférentiellement comme étant une pupille virtuelle ramenée dans l'espace d'entrée.

Sur la figure 7, on prend l'exemple non limitatif d'un dispositif optique 37 comportant trois éléments dont les diaphragmes d'ouverture ont respectivement $\pi_1$ $\pi_2$ et $\pi_3$ . $P_1$, $P_2$ et $P_3$ sont les conjugués dans l'espace objet de ces diaphragmes $\pi_1$, $\pi_2$ et $\pi_3$. Le faisceau incident ur le miroir 2 étant collimaté, $P_2$ qui est l'ouverture de plus petit diamètre est donc la pupille d'entrée 35, $\pi_2$ est donc le diaphragme d'ouverture.

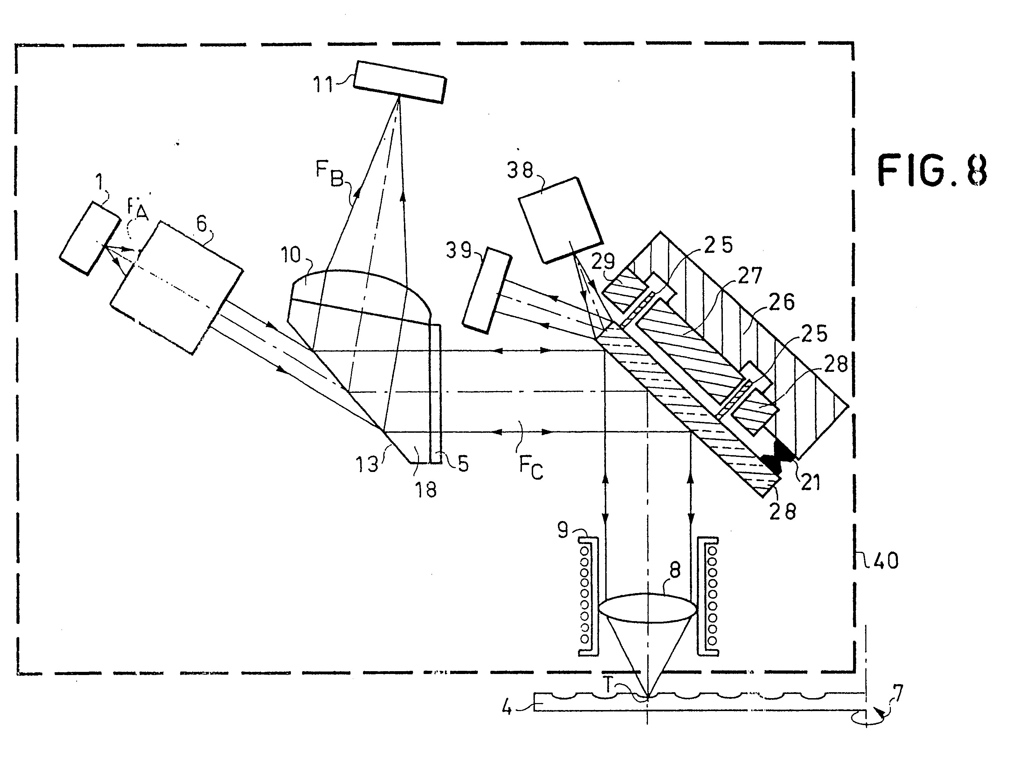

On considère alors la tête optique de l'invention comprenant le miroir de renvoi 2 tel que décrit précédemment et qui est illustré notament, à titre non limitatif, à la figure 4, en tenant compte de la modifcation illustrée à la figure 6. On obtient ainsi une tête optique inégrée 40 selon l'invention. Celle ci est illustrée à la figure 8. Les éléments décrits précédemment dans les figures 1 et 4 ont conservé les mêmes numéros. Le fonctionnement général de cette tête 40 a été décrit précédemment en illustration à la figure 1.

Dans la tête optique de l'invention, l'axe de pivotement du miroir galvanométrique 2 n'est donc pas confondu avec le centre de gravité de 2la structure pivotante; ainsi lors d'un déplacement rapide de la tête optique, l'accélération imprimée au miroir, fait naitre un couple de renversement qui désoriente ce miroir 2. Ce miroir galvanométrique 2 peut tourner autour de l'axe matérialisé par la section étranglée du support à section en X. Le pivotement intempestif dû à l'accélération subie lors d'un déplacement rapide de la tête optique, perturbe l'asservissement radial. Le document US-A-3 772 464 décrit un dispositif optique à balayage dans lequel l'orientation d'un miroir pivotant est évaluée à l'aide d'un faisceau auxiliaire réfléchi qui éclaire un photodétecteur linéaire. Dans ce dispositif, la commande d'orientation du miroir dépend de la comparaison d'un signal de balayage avec le signal produit par le photodétecteur linéaire.

La figure 8 illustre une tête optique pouvant être soumise à un déplacement rapide capable d'engendrer un pivotement du miroir de renvoi. Pour enrayer ce déséquilibre du miroir 2 pendant le déplacement rapide de la tête optique une source émettrice 38 qui peut être, par exemple, une diode émissive envoie un faisceau lumineux qui se réfléchit, par exemple, sur la tranche du miroir rendue réfléchissante pour atteindre des moyens photodétecteurs 39. Ces moyens photodétecteurs 39 permettent alors de bloquer le miroir 2 dans une position prédéterminée pendant le déplacement rapide de la tête optique.

Ces moyens photodétecteurs peuvent être réalisés avec une cellule deux quadrants par exemple.

Il est aussi possible de coller une diode lumineuse sur le bord du miroir au niveau de son axe de rotation sans perturber le bon fonctionnement du miroir. Il suffit alors d'approcher compte tenu de la divergence de la diode, une cellule deux quadrants fixe, dont l'axe de séparation est parallèle à l'axe de rotation, jusqu'à obtenir le gain de boucle suffisant.

Dans la variante représentée à la figure 8, le dispositif séparateur par polarisation est réalisé avec un prisme 18.

Ce prisme joue aussi le rôle de séparateur de faisceau par polarisation, c'est pourquoi sa face d'entrée 13 a subi un traitement séparateur de polarisstion qui transmet complètement la lumière incidente et réfléchit complètement la lumière polarisée à 90° qui revient après réflexion sur la surface du disque 4.

La lame quart d'onde 5 qui permet de faire tourner la polarisation de la lumière réfléchie par le disque de 90° par rapport à celle de la lumière incidente, taillée orientée dans un carré dont les lignes neutres sont les diagonales, a été collée sur l'un des côtés du prisme 18.

L'objectif 10 peut être réalisé avec une lentille plan convexe qui peut être, par exemple, collée sur l'autre côté du prisme 18 comme représenté à la figure 8. Ce qui permet la focalisation sur les moyens de détection 11.

**Revendications**

1. Tête optique (40) dans un dispositif d'enregistrement lecture d'un disque support d'information comprenant des éléments de piste adjacents, comportant une source laser (1) à semiconducteur émettant un faisceau collimaté selon une direction déterminée et éclairant via un miroir de renvoi (2) pivotant autour d'un axe (26) la pupille d'entrée (35) d'un objectif (8) projetant dans une surface de référence contenant ladite piste un spot lumineux astreint par des moyens d'asservissement radial à suivre l'un quelconque desdits éléments de piste lors du défilement dudit support d'information sous ladite tête optique; lesdits moyens d'asservissement radial comportant des moyens photodétecteurs (11) du rayonnement recueilli par cet objectif (8) en provenance de ce support d'information (4); ladite tête optique étant mobile dans une direction orthogonale aux éléments de piste, afin d'accéder avec ledit spot à l'un quelconque desdits éléments de piste agencés dans ladite surface de référence, caractérisée en ce que ledit axe est situé dans le plan de ladite pupille (35); ladite pupille (35) étant imagée dans le plan focal dudit objectif (8) et ledit miroir (2) coopérant avec des moyens de blocage.

2. Tête optique selon la revendication 1, caractérisée en ce que lesdits moyens de blocage comportent des moyens optiques associés audit miroir (2) pour mettre en évidence un pivotement intempestif dudit miroir par rapport à une position prédéterminée d'équilibre, afin de produire un signal électrique de contrôle; ledit signal réagissant sur l'élément moteur dudit miroir pour enrayer son déséquilibre lors du déplacement rapide de ladite tête optique.

3. Tête optique selon la revendication 2, caractérisée en ce que les moyens optiques associés au miroir (2) comportent une seconde source lumineuse (38) émettant un rayonnement, se réfléchissant sur le miroir (2) pour atteindre de seconds moyens photodétecteurs (35).

4. Tête optique selon la revendication 3, caractérisé en ce que le rayonnement émis par cette seconde source (38) lumineuse se réfléchit sur la tranche du miroir pour atteindre les seconds moyens photodétecteurs (39).

5. Tête optique selon la revendication 2, caractérisée en ce que les moyene optiques associés au miroir (2) comportent une diode lumineuse disposée sur la bord du miroir au niveau de son axe de rotation.

6. Tête optique selon l'une quelconque des revendications 1 et 2, caractérisée en ce que le miroir de renvoi (2) est solidaire d'un cadre bobiné (25) de forme recangulaire parcouru par un courant électrique variable et plongeant dans des champs magnétiques fixes fournis par des moyens inducteurs fixes constitués de trois blocs parallélépipédiques de ferrite (27, 28, 28) alignés pour créer deux entrefers (30, 31) traversés par des champs magnétiques de même direction, un élément élastique (21) de section en X ayant deux faces d'appui parallèles, l'une des faces (23) étant fixée à un des blocs (28) parallépipédiques extérieurs, l'autre face (22) étant fixée à la face dorsale du miroir de renvoi (2), cet élément servant d'axe de rotation au miroir de renvoi (2).

**Patentansprüche**

1. Optischer Kopf (40) in einer Schreib-Lesevorrichtung für eine Informationsträgerscheibe, die nebeneinanderliegende Spurelemente aufweist, mit einer Halbleiterlaserquelle (1), die ein kollimatiertes Bindel entlang einer bestimmten Richtung aussendet und über einen um eine Achse (26) schwenkenden Umlenkspiegel (2) die Eingangsöffnung (35) eines Objektivs (8) beleuchtet, das auf eine die genannte Spur enthaltende Bezugsoberfläche einen Lichtpunkt projiziert, der von Radial-Regelmitteln dazu gezwungen wird, einem beliebigen der genannten Spurelemente während des Durchlaufs des Informationsträgers unter dem optischen Kopf zu folgen, wobei die Radial-Regelmittel Lichtdetektormittel (11) für die von dem Objektiv (8) aufgefangene und von dem Informationsträger (4) kommende Strahlung aufweisen, wobei der optische Kopf in einer zu den Spurelementen senkrechten Richtung beweglich ist, um mit dem Fleck zu irgendeinem der in der Bezugsebene angeordneten Spurelemente zu gelangen, dadurch gekennzeichnet, daß die Achse sich in der Ebene der Eingangsöffnung (35) befindet, wobei die Eingangsöffnung (35) in der Brennebene des Objektivs (8) abgebildet wird und der Spiegel (2) mit Blockiermitteln zusammenwirkt.

2. Optischer Kopf nach Anspruch 1, dadurch gekennzeichnet, das die Blockiermittel mit dem Spiegel (2) verbundene optische Mittel aufweisen, um ein unzeitiges Schwenken des Spiegels in bezug auf eine vorbestimmte Gleichgewichtsposition aufzuzeigen, so daß ein elektrisches Kontrollsignal erzeugt wird, das auf das Antriebselement des Spiegels reagiert, um sein Ungleichgewicht während der schnellen Bewegung des optischen Kopfs einzugrenzen.

3. Optischer Kopf nach Anspruch 2, dadurch gekennzeichnet, daß die zum Spiegel (2) gehörenden optischen Mittel eine zweite Lichtquelle (38) aufweisen, die eine Strahlung aussendet, welche im Spiegel (2) reflektiert wird, um zweite Lichtdetektormittel (39) zu erreichen.

4. Optischer Kopf nach Anspruch 3, dadurch gekennzeichnet, daß die von dieser zweiten Lichtquelle (38) ausgesandte Strahlung auf der Spiegelkante reflektiert wird, um die zweiten Lichtdetektormittel (39) zu erreichen.

5. Optischer Kopf nach Anspruch 2, dadurch gekennzeichnet, daß die zum Spiegel (2) gehörenden optischen Mittel eine Leuchtdiode aufweisen, die auf dem Rand des Spiegels in Höhe seiner Rotationsachse angeordnet ist.

6. Optischer Kopf nach einem beliebigen der Ansprüche 1 und 2, dadurch gekennzeichnet, daß der Umlenkspiegel (2) fest mit einem Spulenrahmen (25) rechteckiger Form verbunden ist, der von einem variablen elektrischen Strom durchflossen wird und in feste Magnetfelder eintaucht, die von festen Induktormitteln geliefert werden, welche aus drei fluchtenden parallelepipedischen Ferritblöcken (27, 28, 29) bestehen, um zwei Magnetspalte (30, 31) zu bilden, die von Magnetfeldern gleicher Richtung durchquert werden, wobei ein elastisches Element (21) mit X-förmigem Querschnitt zwei parallele Auflageseiten hat, von denen eine (23) an einem der äußeren parallelepipedischen Blöcke (28) befestigt und die andere (22) an der Rickseite des Umlenkspiegels (2) befestigt ist, wobei dieses Element als Rotationsachse des Umlenkspiegels (2) dient.

## Claims

1. An optical head (40) in a write-read device for an information carrier disk comprising adjacent track elements, the head including a semiconductor laser source (1) emitting a collimated bundle along a predetermined direction and illuminating, via a reflection mirror (2) pivoting about an axis (26), the input pupil (35) of a lens (8) projecting a light spot into a reference surface containing said track, this spot being forced by radial feedback control means to follow any one of said-track elements during the passage of said information carrier under said optical head; said radial feedback control means comprising photodetector means (11) for detecting the radiation received through this lens (8) from the information carrier (4), said optical head being mobile in a direction which is orthogonal to the track elements in order to reach with said spot any one of said track elements disposed in said reference surface, characterized in that said axis is situated in the plane of said pupil (35); said pupil (35) being imaged in the focal plane of said lens (8) and said mirror (2) cooperating with blocking means.

2. An optical head according to claim 1, characterized in that said blocking means comprise optical means associated to said mirror (2) in order to show an untimely pivoting of said mirror with respect to a predetermined equilibrium position, in order to produce an electrical control signal reacting on the motor element of said mirror for reducing its disequilibrium during the fast movement of the optical head.

3. An optical head according to claim 2, characterized in that the optical means associated to the mirror (2) comprise a second light source (38) emitting a radiation which is reflected on the mirror (2) in order to reach second photodetector means (39).

4. An optical head according to claim 3, characterized in that the radiation emitted by this second light source (38) is reflected on the edge of the mirror in order to reach the second photodetector means (39).

5. An optical head according to claim 2, characterized in that the optical means associated to the mirror (2) comprise a light diode disposed on the edge of the mirror at the level of its rotation axis.

6. An optical head according to any one of claims 1 and 2, characterized in that the reflecting mirror (2) is fixed to a coiled frame (25) of rectangular form traversed by a variable electrical current and inserted into fixed magnetical fields supplied by fixed inductor means constituted by three aligned parallelepipedic ferrite blocks (27, 28, 29) in order to create two magnetic gaps (30, 31) traversed by magnetic fields of the same direction, a resilient element (21) with an X-shaped cross-section having two parallel bearing sides, one of the faces (22) being fixed to one of the outer parallelepipedic blocks (28), the other face (22) being fixed to the rear side of the reflecting mirror (2), this element serving as rotation axis for the reflection mirror (2).

# FIG.1

# FIG.2

# FIG.3

# FIG.4

# FIG.5

# FIG.6

# FIG.7

FIG. 8

0 090 683